# EUROPEAN PATENT SPECIFICATION

(11) **EP 4 426 146 B1**
(45) Date of publication and mention of the grant of the patent: **02.07.2025**
(21) Application number: 22808816.7
(22) Date of filing: 26.10.2022
(51) Int. Cl.: A24F 40/465, A24F 40/51, A24F 40/57, G01K 7/38, A24F 40/20

(54) **TEMPERATURE MEASUREMENT SYSTEM FOR AN AEROSOL-GENERATING DEVICE, AEROSOL-GENERATING DEVICE COMPRISING THE TEMPERATURE MEASUREMENT SYSTEM AND METHOD FOR MEASURING A TEMPERATURE IN AN AEROSOL-GENERATING DEVICE**
TEMPERATURMESSSYSTEM FÜR EINE AEROSOLERZEUGENDE VORRICHTUNG, AEROSOLERZEUGENDE VORRICHTUNG MIT DEM TEMPERATURMESSSYSTEM UND VERFAHREN ZUR MESSUNG EINER TEMPERATUR IN EINER AEROSOLERZEUGENDEN VORRICHTUNG
SYSTÈME DE MESURE DE LA TEMPÉRATURE POUR UN DISPOSITIF DE GÉNÉRATION D'AÉROSOL, DISPOSITIF DE GÉNÉRATION D'AÉROSOL COMPRENANT LE SYSTÈME DE MESURE DE LA TEMPÉRATURE ET PROCÉDÉ DE MESURE D'UNE TEMPÉRATURE DANS UN DISPOSITIF DE GÉNÉRATION D'AÉROSOL

(30) Priority: 04.11.2021 EP 21206432
(43) Date of publication of application: 11.09.2024
(73) Proprietor: JT International S.A., 1202 Geneva (CH)
(72) Inventor: MONTICONE, Pier Paolo, 6430 Schwyz (CH); BOUCHUIGUIR, Layth Sliman, 1293 Bellevue (CH)
(74) Representative: Hoffmann Eitle
(86) International application number: PCT/EP2022/079905
(87) International publication number: WO 2023/078751

(56) References cited:
- EP-A1- 3 606 363
- WO-A1-2022/059931
- CN-A- 111 011 935
- US-A1- 2021 084 980

## Description

### TECHNICAL FIELD

The present invention generally relates to the field of aerosol-generating devices. In particular, the present invention is directed to a temperature measurement system for an aerosol-generating device, an aerosol-generating device comprising such a temperature measurement system, and a method for measuring a temperature in an aerosol-generating device.

### TECHNICAL BACKGROUND

In recent years, devices which heat rather than burn or combust a substance in order to generate a vapour or aerosol intended for inhalation by a user have become increasingly popular.

Such commonly used devices normally use tobacco and/or other suitable substances that are heated but not burned to create an inhalable aerosol. The tobacco and/or the other suitable substance may also be called an aerosol-generating substance and the device may be called an aerosol-generating device.

Normally, the aerosol-generating substance is placed in a container, also called a stick or a tobacco stick, that can be inserted in and removed from the aerosol-generating device by the user. In other words, the stick or tobacco stick is a consumable article.

In general, the user inserts the consumable article in the heating compartment of the aerosol-generating device. The heating compartment of the aerosol-generating device is also known as heating chamber or oven chamber. When the user has inserted the consumable article in the heating compartment, he may turn on the heating of the aerosol-generating device by operating an operation button. Thereafter, the user waits until the heating has progressed to a state in which the aerosol-generating substance that is heated generates an aerosol that can be consumed by the user.

In this context, the temperature of the aerosol-generating substance plays an important role in the use of aerosol-generating devices: On the one hand, reaching a minimum temperature of the aerosol-generating substance is necessary for obtaining a suitable amount of aerosol. On the other hand, extremely high temperatures should also be avoided because, for instance, polymer layers in the fluid chamber and nozzle may start to melt and because the aerosol that is ejected from the aerosol-generating device may be burnt or too hot to be consumed by the user. Further, excessively high temperatures may lead to the formation of undesirable or even harmful components in the aerosol. In addition, different types of aerosol-generating substances may necessitate different temperatures for the aerosol generation. Finally, users of the aerosol-generating device may have different personal preferences with regard to the preferred heating temperature of the aerosol-generating substances.

In view of the above, there is a need for measuring the temperature of the aerosol-generating substance. However, due to the limited available space in the oven chamber, measuring the temperature within the consumable itself or even at a location in direct proximity of the consumable is inherently difficult. Further, the accuracy of a temperature probe may be corrupted by the kind of heating that is employed, for instance if a conductive temperature prove is inserted in an oven chamber that is heated by inductive heating.

Conventionally known devices therefore focus on safety measures that are tailored to avoiding excessively high temperatures.

For instance, EP3606363A1 proposes to hold and heat an aerosol-forming liquid by an open-porous inductively heatable ceramic material, wherein heating results mainly or even exclusively from hysteresis losses. Said material is preferably ferrimagnetic or ferromagnetic and electrically non-conductive. In this case, the inductive heatability essentially disappears above the Curie temperature. This effect is used for controlling the maximum heating temperature of the susceptor.

EP3788893A1 discloses an aerosol-generating device comprising a housing and a control unit. The housing comprises a cavity for inserting an aerosol generating article and a magnetic element. When an overly high temperature is detected, a magnetic element control module controls the magnetic element to generate a magnetic repulsive force on the aerosol-generating article such that the aerosol-generating article is displaced.

An alternative approach is pursued in KR102231229B1: This document suggests providing a diamagnetic or paramagnetic material between the heating body and the temperature measuring apparatus, thereby minimizing measurement inaccuracies that stem from eddy currents caused by electromagnetic waves of the coil. Put differently, the temperature of the heating body is indirectly measured in this document.

Document CN110236230A is concerned with a temperature control device of an electronic cigarette comprising a thermocouple, an electromotive force sampling circuit and a control module. A hot end of the temperature difference thermocouple is connected to an atomizer of the electronic cigarette and the electromotive force sampling circuit is connected with the cold end. The control module is connected with the electromotive force sampling circuit and the temperature sensor. The control module obtains an electromotive force according to the temperature information at the cold end of the thermocouple and a pre-set temperature-electromotive force comparison table. By obtaining a real time temperature of the hot end with the help of the temperature-electromotive force comparison table, the temperature of the atomizer is controlled.

US 2021/084980 A1 is also related to an aerosol generating device having a heater assembly, an accommodation space, a coil, a power supply unit, a controller and a cigarette comprising a tobacco rod and a filter rod, wherein the heater assembly comprises a heating element including a ferromagnetic material and a temperature sensor for measuring the temperature of the heating element of the heating assembly.

According to WO 2022/0599531 A1, there are additionally provided a magnetic field source, ferromagnetic material, a force sensor configured to measure an attractive force between the magnetic field source and the ferromagnetic material, a memory storing recorded data associated with a force value indicative for the temperature of the ferromagnetic material, and a control unit configured to determine temperature information on the basis of the measured force value from the force sensor and the pre-recorded data.

### SUMMARY OF THE INVENTION

The present invention is intended to address one or more of the above technical problems. One or more of these problems can be remedied by the subject-matter of the independent claims. Further preferred embodiments are defined in the dependent claims.

In particular, in view of the challenges discussed above, the present inventors have devised a temperature measurement system for an aerosol-generating device, comprising a magnetic field source, a ferromagnetic material and a force sensor that configured to measure an attractive force between the magnetic field source and the ferromagnetic material. The temperature measurement system further comprises a memory, on which pre-recorded data is stored that associates at least one force value with a value that is indicative for the temperature of the ferromagnetic material, and a control unit that is configured to determine a temperature information on the basis of a measured force value from the force sensor and the pre-recorded data.

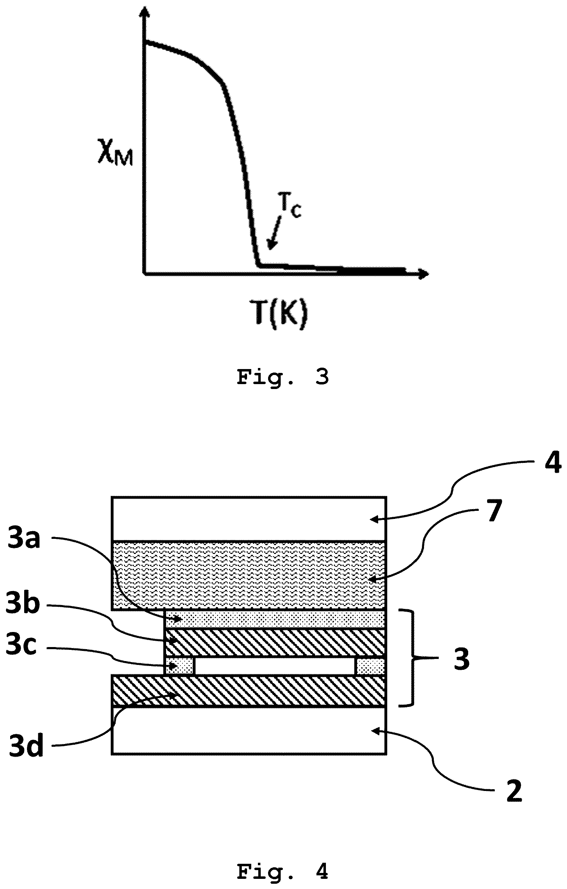

In particular, the present inventors surprisingly discovered that the correlation between the temperature of a given ferromagnetic material and its magnetic susceptibility can be put to use for a temperature measurement. Specifically, the present invention stipulates the provision of a magnetic field source and a ferromagnetic material. The ferromagnetic material is magnetized by the magnetic field originating from the magnetic field source, leading to an attractive force between the magnetic field source and the ferromagnetic material. A force sensor is configured to measure said attractive force between the magnetic field source and the ferromagnetic material. As mentioned above, the magnetic susceptibility and, thus, the attractive force between the magnetic field source and the ferromagnetic material depends on the temperature of the ferromagnetic material (see Figure 3). In the present invention, this causal relationship is exploited by pre-recording and storing reference data in a memory and subsequently determining a temperature information by evaluating a measured force value from the force sensor vis-à-vis said pre-recorded reference data.

Put differently, the physical principle of this wireless thermometer is based on the fact that the attraction force between ferromagnetic material and magnetic field source is a function of the ferromagnetic susceptibility that is a function of temperature, see Figure 3. Calibrating the reading on the transfer function force/temperature, it is possible to determine the temperature of the ferromagnetic material that would act as a temperature sensor without being wired to any electronics, thus wireless. Thanks to this wireless property, the ferromagnetic material can be placed in places where wiring is not possible of difficult, e.g. inside the consumable or inside the oven chamber.

Instead of a ferromagnetic material, a ferrimagnetic material can also be used. Note that all features and preferable embodiments that have been presented in the context of an embodiment with a ferromagnetic material can also be implemented with a ferrimagnetic material.

A quantitative relationship between the attractive force and the temperature can preferably be established by conducting a corresponding calibration. As an alternative, a quantitative correlation between the attractive force and the temperature can be estimated based on the specific materials (type of magnetic field source and ferromagnetic material, distance between them, Curie constant, etc.) and formulas such as Curie's law and the Curie-Weiss law. The correlation data between the attractive force and the temperature may subsequently be pre-recorded in the memory of the temperature measurement system. During the use of the aerosol-generating device, the control unit may then retrieve a measured force value from the force sensor and compare said value with the pre-recorded data. Based on this comparison, the control unit determines a temperature information relating to the ferromagnetic material.

According to one example of the invention, the pre-recorded correlation data may only comprise one threshold value for an attractive force and one associated value that is indicative for the temperature of the ferromagnetic material. In the above example with the single pre-recorded threshold value for an attractive force, the control unit may compare a measured force value with the threshold value. If the measured force value is lower than the threshold value, the control unit determines that the target temperature (which may, e.g., be a minimum, optimum or maximum temperature) has not been reached yet. If the measured force value is equal to or higher than the threshold value, the control unit determines that the target temperature has been met or surpassed. In this example, the temperature information that is determined by the control unit is a binary parameter, the possible parameter values being "target temperature met or surpassed" and "target temperature not met".

Preferably, the control unit is additionally configured to control the heating based on the obtained temperature information.

According to the invention, the control unit of the temperature measurement system is configured to determine whether the ferromagnetic material has a temperature below or above its Curie temperature. At (or above) the Curie temperature, the magnetic susceptibility of a ferromagnetic material is very small (see Figure 3). Hence, determining whether the ferromagnetic material has a temperature below or above the Curie temperature based on the attractive force between the magnetic field source and the ferromagnetic material can be done with comparatively high reliability. In a particularly preferred embodiment, the ferromagnetic material exhibits a Curie temperature that is of particular interest in the context of aerosol-generating devices, for instance between 150°C and 350°C, more preferably between 200°C and 300°C and even more preferably between 230°C and 270°C. Thereby, a temperature that is particularly relevant in the use of aerosol-generating devices, like the minimum temperature that is necessary for generating a sufficient amount of aerosol, an optimum temperature or a maximum temperature, can be reliably determined. Preferably, the ferromagnetic material exhibits a Curie temperature that corresponds to the maximum temperature, i.e. the highest advisable temperature for the aerosol-generating substance, ±20°C, preferably ±10°C: That is because the dependency of the magnetic susceptibility from the temperature is more pronounced below the Curie temperature, making it easier to reliably determine the temperature in this temperature range of interest, i.e. below the maximum temperature of the aerosol-generating substance.

According to a preferred embodiment, the pre-recorded data maps a plurality of force values with corresponding temperatures of the ferromagnetic material and the control unit is configured to determine the temperature of the ferromagnetic material. In this preferable embodiment, the specific correlation between the attractive force and the temperature may be established by conducting a calibration in which all discrete temperature values in a predefined temperature range are mapped with a corresponding force value or force value range. For instance, the resulting pre-recorded data may map all temperatures between 0°C and 400°C, in 0.1°C or 1°C steps, with a corresponding force value range. In order to avoid any ambiguities, each force value can only be mapped to one temperature value.

According to a preferred embodiment of the invention, the force sensor includes a strain gauge, a load cell, or a system that is configured to transform the force into a displacement and to measure the displacement. These types of force sensors are usually comparatively small, such that they can be easily implemented in the confined space in the proximity of the oven chamber. Further, these sensors can be obtained with high sensitivities such that reliable results can be ensured even with comparatively small attraction forces.

A preferred embodiment of the invention is directed to an aerosol-generating device comprising the temperature measurement system described above as well as an oven chamber having an oven wall.

According to a preferred embodiment of the aerosol-generating device, the ferromagnetic material is provided on the inner surface of the oven wall, and the force sensor and the magnetic field source are provided on the outer surface of the oven wall and facing the ferromagnetic material. This setup ensures a very reliable temperature measurement by reducing the distance between the ferromagnetic material and the consumable that is inserted in the oven chamber. Put differently, the temperature of the ferromagnetic material is very similar to the temperature of the aerosol-generating substance in the consumable.

According to another preferred embodiment of the invention, the aerosol-generating device comprises a consumable, preferably a tobacco stick, that is at least partially inserted in the oven chamber. Further, the ferromagnetic material is provided inside the consumable within the oven chamber, and the force sensor and the magnetic field source are provided on the outer surface of the oven wall and facing the ferromagnetic material. In this arrangement, the ferromagnetic material is in direct contact with the aerosol-generating substance in the consumable. The temperature of the ferromagnetic material is therefore essentially identical to the temperature of the aerosol-generating substance in the consumable. Preferably, the oven chamber and the consumable have concentric cylindrical shapes and the ferromagnetic material is placed on the cylinder axis (of the consumable) within the consumable. This ensures a continuous distance between the ferromagnetic material and the magnetic field source and, thus, reliable measurements.

According to a preferred embodiment of the invention, the oven chamber of the aerosol-generating device consists entirely of nonmagnetic material or comprises a nonmagnetic window between the ferromagnetic material and the force sensor and magnetic field source. This feature significantly improves the sensitivity of the attraction force measurement. In the context of the present invention, the term nonmagnetic material designates a paramagnetic and/or diamagnetic material.

Further, the present inventors have devised a method for measuring a temperature in an aerosol-generating device, comprising the steps of providing a magnetic field source, a ferromagnetic material, and a force sensor, measuring, with the force sensor, an attractive force between the magnetic field source and the ferromagnetic material, and determining a temperature information on the basis of a measured force value that is obtained from the force sensor and pre-recorded data that associates at least one force value with a value that is indicative for the temperature of the ferromagnetic material, wherein a control unit determines whether the ferromagnetic or ferrimagnetic material has a temperature below and/or above its Curie temperature. For the reasons presented above, this measurement method is suitable for reliably measuring a temperature in an aerosol-generating device.

### BRIEF DESCRIPTION OF THE DRAWINGS

Hereinafter, the invention will be described with reference to exemplary embodiments thereof, in which
FIG. 1 shows a schematic sectional drawing of an aerosol-generating device comprising a temperature measurement system according to one embodiment of the present invention,
FIG. 2 shows a schematic sectional drawing of an aerosol-generating device comprising another embodiment of the present invention,
FIG. 3 plots the qualitative relationship between the magnetic susceptibility and the temperature of a ferromagnetic (or ferrimagnetic) material, and
FIG. 4 is a detailed view of the magnetic field source, the nonmagnetic window in the oven wall, the force sensor and the magnetic field source of the temperature measurement system depicted in Figure 1.

### DETAILED DESCRIPTION OF PREFERRED EMBODIMENTS

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and/or well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

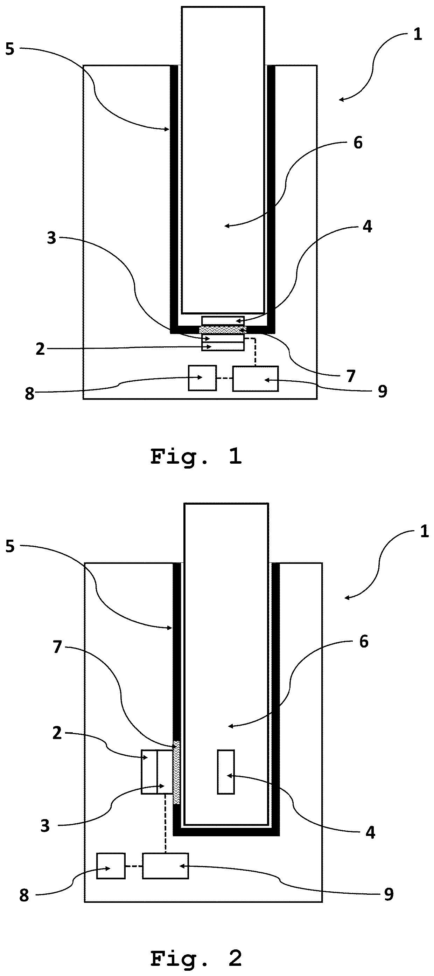

Figure 1 shows a schematic cross-sectional view of the aerosol-generating device 1 according to one embodiment of the present invention along the elongated direction of the aerosol-generating device 1.

The aerosol-generating device 1 houses an oven chamber comprising an oven wall 5. The oven chamber is configured such that the user can place a consumable article 6 in it. Preferably, the oven chamber and the consumable article have an elongated cylindrical form. However, the form of the consumable article 6 and the oven chamber are not to be seen as limiting to the concept of the present invention. The oven chamber comprises one or more oven walls 5. For example, the oven chamber may comprise a cylindrical side wall when the form of the oven chamber is the cylindrical form as mentioned above, or may comprise a plurality of sidewalls when the form of the oven chamber differs from the cylindrical form.

While not shown in Figure 1, the aerosol-generating device 1 may comprise a heater for supplying heat to the oven chamber, thereby heating the aerosol-generating substance in the consumable article 6 when inserted in the heating compartment. The heater is also placed in the housing portion of the aerosol-generating device 1. The heater is preferably a heater that supplies heat to the oven chamber based on a resistive heating. The type of heating is, however, not to be seen as limiting to the concept of the present invention.

The aerosol-generating device 1 shown in Figure 1 is equipped with a temperature measurement system according to one embodiment of the present invention. This temperature measurement system comprises a ferromagnetic material 4 that is provided on the inner surface of the oven wall 5 defining the oven chamber, specifically on the inner surface of the bottom base of the cylindrical oven chamber. The ferromagnetic material 4 is preferably disk-shaped.

A NdFeB grade N35 magnet is used as a magnetic field source 2. The magnet is also disk-shaped, with a diameter of 10 mm and a thickness of 2 mm. The maximum pull force generated between a single magnet and a thick, ground, flat steel plate is approximately 36 N. As an alternative, a grade N52 magnet can also be used. In a distance of 0.5 cm, this magnet still generates a pull force of approximately 0.5 N.

The force sensor 3 in this embodiment is a so-called Force Sensing Resistor (FSR). These sensors are robust polymer thick film (PTF) devices that exhibit a decrease in resistance with increase in force applied to the surface of the sensor. FSR devices are commonly available, with force sensitivity range usually being selected between ~0.2 N and 20 N. In the present embodiment, a Interlink Electronics FSR 402 Short sensor has been used. The force sensor comprises, from top to bottom, an adhesive 3a, a top substrate 3b, a spacer adhesive 3c and a bottom substrate 3d (cf. Figure 4).

In this embodiment, the magnetic field source 2 is glued to the bottom substrate 3b of the force sensor 3 only. Put differently, the magnet is free to move against the bottom substrate 3b of the force sensor 3. The rest of the structure does not need to move as it is the magnet that makes the tiny motion that is required to deform the bottom substrate into the spacer adhesive gap. This deformation will result in a change of resistance on the resistance printed on the bottom substrate.

Figure 2 shows a schematic cross-sectional view of the aerosol-generating device 1 according to another embodiment of the present invention. One major difference vis-à-vis the embodiment of Figure 1 resides in the location of the ferromagnetic material 4: In this embodiment, the ferromagnetic material is provided within the consumable **6.** This configuration brings the ferromagnetic material 4 in contact with the aerosol-generating substance, thereby (theoretically) increasing the accuracy of the temperature measurement. However, the increased distance between the ferromagnetic material 4 and the magnetic field source 2 also significantly limits the resulting attracting force, which renders it more difficult to accurately determine the temperature on the basis of the measured force values. Additionally, the embodiment of Figure 2 also differs from the embodiment of Figure 1 in that the magnetic field source 2 and the force sensor 3 are provided on a side oven wall of the oven chamber.

### REFERENCE SIGNS

- 1: Aerosol-generating device
- 2: Magnetic field source
- 3: Force sensor
- 3a: Adhesive
- 3b: Top substrate
- 3c: Spacer adhesive
- 3d: Bottom substrate
- 4: Ferromagnetic or ferrimagnetic material
- 5: Oven wall
- 6: Consumable
- 7: Nonmagnetic window
- 8: Memory
- 9: Control unit

## Claims

1. A temperature measurement system for an aerosol-generating device (1), comprising
a magnetic field source (2),
a ferromagnetic or ferrimagnetic material (4),
a force sensor (3), configured to measure an attractive force between the magnetic field source (2) and the ferromagnetic or ferrimagnetic material (4),
a memory (8), on which pre-recorded data is stored that associates at least one force value with a value that is indicative for the temperature of the ferromagnetic or ferrimagnetic material (4), and
a control unit (9) that is configured to determine a temperature information on the basis of a measured force value from the force sensor (3) and the pre-recorded data, wherein the control unit (9) is configured to determine whether the ferromagnetic or ferrimagnetic material (4) has a temperature below or above its Curie temperature.

2. The temperature measurement system according to claim **1,** wherein the pre-recorded data maps a plurality of force values with corresponding temperatures of the ferromagnetic or ferrimagnetic material (4) and wherein the control unit (9) is configured to determine the temperature of the ferromagnetic or ferrimagnetic material (4).

3. The temperature measurement system according to any one of the preceding claims, wherein the force sensor (3) includes a strain gauge, a load cell, or a system that is configured to transform the force into a displacement and to measure the displacement.

4. An aerosol-generating device (1), comprising the temperature measurement system according to any one of the preceding claims and an oven chamber having an oven wall (5).

5. The aerosol-generating device (1) according to claim 4, wherein the ferromagnetic or ferrimagnetic material (4) is provided on the inner surface of the oven wall (5), and
wherein the force sensor (3) and the magnetic field source (2) are provided on the outer surface of the oven wall (5) and facing the ferromagnetic or ferrimagnetic material (4).

6. The aerosol-generating device (1) according to claim 4, comprising a consumable (6), preferably a tobacco stick, that is at least partially inserted in the oven chamber, wherein the ferromagnetic or ferrimagnetic material (4) is provided inside the consumable (6) within the oven chamber, and
wherein the force sensor (3) and the magnetic field source (2) are provided on the outer surface of the oven wall (5) and facing the ferromagnetic or ferrimagnetic material (4).

7. The aerosol-generating device (1) according to any one of claims 4 to 6, wherein the oven chamber consists entirely of nonmagnetic material or comprises a nonmagnetic window (7) between the ferromagnetic or ferrimagnetic material (4) and the force sensor (3) and magnetic field source (2).

8. Method for measuring a temperature in an aerosol-generating device (1), comprising the steps of providing a magnetic field source (2), a ferromagnetic or ferrimagnetic material (4), and a force sensor (3), measuring, with the force sensor (3), an attractive force between the magnetic field source (2) and the ferromagnetic or ferrimagnetic material (4), and determining a temperature information on the basis of a measured force value that is obtained from the force sensor (3) and pre-recorded data that associates at least one force value with a value that is indicative for the temperature of the ferromagnetic or ferrimagnetic material (4), wherein a control unit (9) determines whether the ferromagnetic or ferrimagnetic material (4) has a temperature below or above its Curie temperature.

## Patentansprüche

1. Temperaturmesssystem für eine aerosolerzeugende Vorrichtung (1), das Folgendes umfasst:
eine Magnetfeldquelle (2),
ein ferromagnetisches oder ferrimagnetisches Material (4),
einen Kraftsensor (3), der so konfiguriert ist, dass er eine Anziehungskraft zwischen der Magnetfeldquelle (2) und dem ferromagnetischen oder ferrimagnetischen Material (4) misst,
einen Speicher (8), in dem voraufgezeichnete Daten gespeichert sind, die mindestens einen Kraftwert einem Wert zuordnen, der für die Temperatur des ferromagnetischen oder ferrimagnetischen Materials (4) kennzeichnend ist, und
eine Steuereinheit (9), die so konfiguriert ist, dass sie eine Temperaturinformation auf der Grundlage eines gemessenen Kraftwerts von dem Kraftsensor (3) und der vorab aufgezeichneten Daten bestimmt, wobei die Steuereinheit (9) so konfiguriert ist, dass sie bestimmt, ob das ferromagnetische oder ferrimagnetische Material (4) eine Temperatur unter oder über seiner Curie-Temperatur aufweist.

2. Temperaturmesssystem nach Anspruch 1, wobei die vorab aufgezeichneten Daten eine Vielzahl von Kraftwerten mit entsprechenden Temperaturen des ferromagnetischen oder ferrimagnetischen Materials (4) abbilden, und wobei die Steuereinheit (9) so konfiguriert ist, dass sie die Temperatur des ferromagnetischen oder ferrimagnetischen Materials (4) bestimmt.

3. Temperaturmesssystem nach einem der vorstehenden Ansprüche, wobei der Kraftsensor (3) einen Dehnungsmessstreifen, eine Wägezelle oder ein System einschließt, das so konfiguriert ist, dass es die Kraft in eine Verschiebung umwandelt und die Verschiebung misst.

4. Aerosolerzeugende Vorrichtung (1), umfassend das Temperaturmesssystem nach einem der vorstehenden Ansprüche und einen Ofenraum, der eine Ofenwand (5) aufweist.

5. Aerosolerzeugende Vorrichtung (1) nach Anspruch 4, wobei das ferromagnetische oder ferrimagnetische Material (4) an der Innenfläche der Ofenwand (5) bereitgestellt ist, und
wobei der Kraftsensor (3) und die Magnetfeldquelle (2) an der Außenfläche der Ofenwand (5) und gegenüber dem ferromagnetischen oder ferrimagnetischen Material (4) bereitgestellt sind.

6. Aerosolerzeugende Vorrichtung (1) nach Anspruch 4, die ein Verbrauchsmaterial (6), bevorzugt einen Tabakstick, umfasst, das mindestens teilweise in die Ofenkammer eingeführt wird, wobei das ferromagnetische oder ferrimagnetische Material (4) im Inneren des Verbrauchsmaterials (6) innerhalb der Ofenkammer bereitgestellt ist, und
wobei der Kraftsensor (3) und die Magnetfeldquelle (2) an der Außenfläche der Ofenwand (5) und gegenüber dem ferromagnetischen oder ferrimagnetischen Material (4) bereitgestellt sind.

7. Aerosolerzeugende Vorrichtung (1) nach einem der Ansprüche 4 bis 6, wobei der Ofenraum vollständig aus nichtmagnetischem Material besteht oder ein nichtmagnetisches Fenster (7) zwischen dem ferromagnetischen oder ferrimagnetischen Material (4) und dem Kraftsensor (3) und der Magnetfeldquelle (2) umfasst.

8. Verfahren zur Messung einer Temperatur in einer aerosolerzeugenden Vorrichtung (1), das die folgenden Schritte umfasst:
Bereitstellen einer Magnetfeldquelle (2), eines ferromagnetischen oder ferrimagnetischen Materials (4) und eines Kraftsensors (3),
Messen einer Anziehungskraft zwischen der Magnetfeldquelle (2) und dem ferromagnetischen oder ferrimagnetischen Material (4) mit dem Kraftsensor (3), und
Bestimmen einer Temperaturinformation auf der Grundlage eines gemessenen Kraftwerts, der von dem Kraftsensor (3) erhalten wird, und voraufgezeichneter Daten, die mindestens einen Kraftwert einem Wert zuordnen, der für die Temperatur des ferromagnetischen oder ferrimagnetischen Materials (4) indikativ ist, wobei eine Steuereinheit (9) bestimmt, ob das ferromagnetische oder ferrimagnetische Material (4) eine Temperatur unter oder über seiner Curie-Temperatur aufweist.

## Revendications

1. Système de mesure de la température pour un dispositif de génération d'aérosol (1), comprenant
une source de champ magnétique (2),
un matériau ferromagnétique ou ferrimagnétique (4),
un capteur de force (3), configuré pour mesurer une force d'attraction entre la source de champ magnétique (2) et le matériau ferromagnétique ou ferrimagnétique (4),
une mémoire (8), sur laquelle sont stockées des données préenregistrées qui associent au moins une valeur de force à une valeur indicative de la température du matériau ferromagnétique ou ferrimagnétique (4), et
une unité de commande (9) qui est configurée pour déterminer des informations de température sur la base d'une valeur de force mesurée provenant du capteur de force (3) et des données pré-enregistrées, l'unité de commande (9) étant configurée pour déterminer si le matériau ferromagnétique ou ferrimagnétique (4) présente une température inférieure ou supérieure à sa température de Curie.

2. Système de mesure de la température selon la revendication 1, dans lequel les données préenregistrées mappent une pluralité de valeurs de force avec des températures correspondantes du matériau ferromagnétique ou ferrimagnétique (4) et dans lequel l'unité de commande (9) est configurée pour déterminer la température du matériau ferromagnétique ou ferrimagnétique (4).

3. Système de mesure de la température selon l'une quelconque des revendications précédentes, dans lequel le capteur de force (3) inclut une jauge de contrainte, un dynamomètre ou un système qui est configuré pour transformer la force en un déplacement et pour mesurer le déplacement.

4. Dispositif de génération d'aérosol (1), comprenant le système de mesure de température selon l'une quelconque des revendications précédentes et une chambre de four présentant une paroi de four (5).

5. Dispositif de génération d'aérosol (1) selon la revendication 4, dans lequel le matériau ferromagnétique ou ferrimagnétique (4) est disposé sur la surface interne de la paroi de four (5), et
dans lequel le capteur de force (3) et la source de champ magnétique (2) sont disposés sur la surface externe de la paroi de four (5) et font face au matériau ferromagnétique ou ferrimagnétique (4).

6. Dispositif de génération d'aérosol (1) selon la revendication 4, comprenant un consommable (6), de préférence un bâtonnet de tabac, qui est au moins partiellement inséré dans la chambre de four, dans lequel le matériau ferromagnétique ou ferrimagnétique (4) est disposé à l'intérieur du consommable (6) à l'intérieur de la chambre de four, et
dans lequel le capteur de force (3) et la source de champ magnétique (2) sont disposés sur la surface externe de la paroi de four (5) et font face au matériau ferromagnétique ou ferrimagnétique (4).

7. Dispositif de génération d'aérosol (1) selon l'une quelconque des revendications 4 à 6, dans lequel la chambre de four consiste entièrement en un matériau non magnétique ou comprend une fenêtre non magnétique (7) entre le matériau ferromagnétique ou ferrimagnétique (4) et le capteur de force (3) et la source de champ magnétique (2).

8. Procédé de mesure de la température dans un dispositif de génération d'aérosol (1), comprenant les étapes de fourniture d'une source (2) de champ magnétique, d'un matériau ferromagnétique ou ferrimagnétique (4), et d'un capteur de force (3), mesure, avec le capteur de force (3), d'une force d'attraction entre la source de champ magnétique (2) et le matériau ferromagnétique ou ferrimagnétique (4), et
détermination d'informations de température sur la base d'une valeur de force mesurée qui est obtenue depuis le capteur de force (3) et de données préenregistrées qui associent au moins une valeur de force à une valeur qui est indicative de la température du matériau ferromagnétique ou ferrimagnétique (4), une unité de commande (9) déterminant si le matériau ferromagnétique ou ferrimagnétique (4) présente une température inférieure ou supérieure à sa température de Curie.
